# FASCICULE DE BREVET EUROPEEN

(11) **EP 1 099 590 B1**
(45) Date de publication et mention de la délivrance du brevet: **16.12.2009**
(21) Numéro de dépôt: 00402716.5
(22) Date de dépôt: 03.10.2000
(51) Int. Cl.: B60L 5/24, B60L 5/19

(54) **Ensemble de captage de courant et véhicule ferroviaire correspondant**
Stromabnehmervorrichtung und entsprechendes Schienenfahrzeug
Current collector assembly and corresponding railway vehicle

(30) Priorité: 10.11.1999 FR 9914165
(43) Date de publication de la demande: 16.05.2001
(73) Titulaire: ALSTOM Transport SA, 92300 Levallois-Perret (FR)
(72) Inventeur: Hazard, Laurent, 78700 Marcq (FR); Benard, Eric, 75003 Paris (FR)

(56) Documents cités:
- EP-A- 0 785 100
- EP-A- 0 936 100
- JP-A- 04 172 901

## Description

La présente invention a pour objet un ensemble de captage de courant pour un véhicule ferroviaire, du type comprenant un pantographe et un support de pantographe, le support de pantographe comprenant un châssis fixe de montage sur le toit d'un véhicule ferroviaire et un châssis mobile portant le pantographe et relié au châssis fixe pour penduler latéralement par rapport à celui-ci de part et d'autre d'une position de repos.

L'invention s'applique en particulier à un véhicule ferroviaire pendulaire.

Un tel véhicule ferroviaire est adapté pour que sa caisse s'incline latéralement par rapport à l'axe des essieux de ses bogies dans les parties courbes des voies ferrées.

Si le véhicule ferroviaire est surmonté d'un ensemble pour capter le courant depuis un fil de contact d'une caténaire, il est alors nécessaire d'incliner latéralement le pantographe par rapport à la caisse dans le sens opposé au sens d'inclinaison de la caisse par rapport à ses essieux, pour limiter le déplacement latéral de l'archet du pantographe par rapport au fil de contact de la caténaire.

En effet, en l'absence d'une telle inclinaison en sens opposé du pantographe, appelée contre-pendulation, le déplacement relatif de l'archet par rapport au fil de contact pourrait être suffisamment important pour qu'il soit en contact uniquement avec des parties isolantes de l'archet ou même espacé latéralement de celui-ci, ce qui pourrait entraîner un endommagement de la caténaire et du pantographe, notamment lors du retour de la caisse dans sa position de repos.

Les documents EP-A-785 100 et EP-A-0936100 décrit un ensemble de captage de courant du type précité dont le châssis mobile du support de pantographe est relié par quatre bielles au châssis fixe. Au repos, c'est-à-dire en l'absence de contre-pendulation, les points d'articulation des bielles forment transversalement un trapèze convergeant vers le bas. Le déplacement latéral du châssis mobile entraîne l'inclinaison latérale du pantographe par rapport à la caisse.

Le déplacement latéral du châssis mobile est assuré au moyen d'un ou plusieurs vérins de poussée latérale du châssis mobile disposé(s) d'un côté ou de part et d'autre du support de pantographe. Un système de commande pilote le(s) vérin(s) pour déplacer le châssis mobile et assurer la contre-pendulation du pantographe.

Pour assurer un déplacement satisfaisant du châssis mobile en limitant les mouvements parasites de translation et de rotation, il convient de prévoir des guides, contre lesquels le châssis mobile glisse, et de disposer un vérin latéral central de chaque côté du châssis mobile.

Le bon fonctionnement de l'ensemble de captage de courant impose donc une structure complexe, volumineuse et sujette à des dissipations d'énergie mécanique par frottement au niveau des guides qui constituent donc des pièces d'usure.

L'encombrement important d'un tel ensemble de captage de courant est particulièrement gênant pour respecter les gabarits imposés aux véhicules ferroviaires sans limiter la hauteur disponible pour les passagers à l'intérieur du véhicule.

Un but de l'invention est de fournir un ensemble de captage de courant du type précité, permettant de guider de manière satisfaisante le châssis mobile et ayant une structure relativement simple.

A cet effet, l'invention a pour objet un ensemble de captage de courant du type précité, caractérisé en ce que le châssis mobile est relié au châssis fixe par deux supports latéraux rigides de pendulation possédant un profil transversal de concavité dirigée vers l'intérieur de l'ensemble de captage de courant, chaque support de pendulation comprenant un étrier articulé par ses branches au châssis fixe en deux points espacés longitudinalement l'un de l'autre, et deux chapes qui prolongent la base de l'étrier et qui sont sensiblement orthogonales aux branches de l'étrier, lesdites deux chapes étant articulées au châssis mobile en deux points espacés longitudinalement l'un de l'autre.

Selon des modes particuliers de réalisation, l'ensemble de captage de courant peut comprendre la caractéristiques suivantes:
- les points d'articulation des supports de pendulation aux châssis mobile et fixe forment transversalement un trapèze convergeant vers le bas lorsque l'ensemble de captage de courant est monté sur le toit d'un véhicule ferroviaire et lorsque le châssis mobile est en position de repos.

L'invention a en outre pour objet un véhicule ferroviaire comprenant un ensemble de captage de courant monté sur le toit du véhicule, caractérisé en ce que l'ensemble de captage du courant est un ensemble tel que défini ci-dessus.

L'invention sera mieux comprise à la lecture de la description qui va suivre, donnée uniquement à titre d'exemple, et faite en se référant aux dessins annexés, sur lesquels :
- la figure 1 est une vue schématique partielle et en perspective illustrant le toit d'un véhicule ferroviaire selon l'invention,
- la figure 2 est une vue schématique en perspective éclatée du support de pantographe et des moyens de déplacement de l'ensemble de captage de courant du véhicule de la figure 1,
- la figure 3 est une vue schématique, en coupe longitudinale et agrandie, illustrant la liaison entre les moyens de déplacement et le châssis mobile des figures 1 et 2, et
- les figures 4 et 5 sont des vues transversales schématiques illustrant le véhicule ferroviaire de la figure 1 respectivement en position de repos et en position de pendulation.

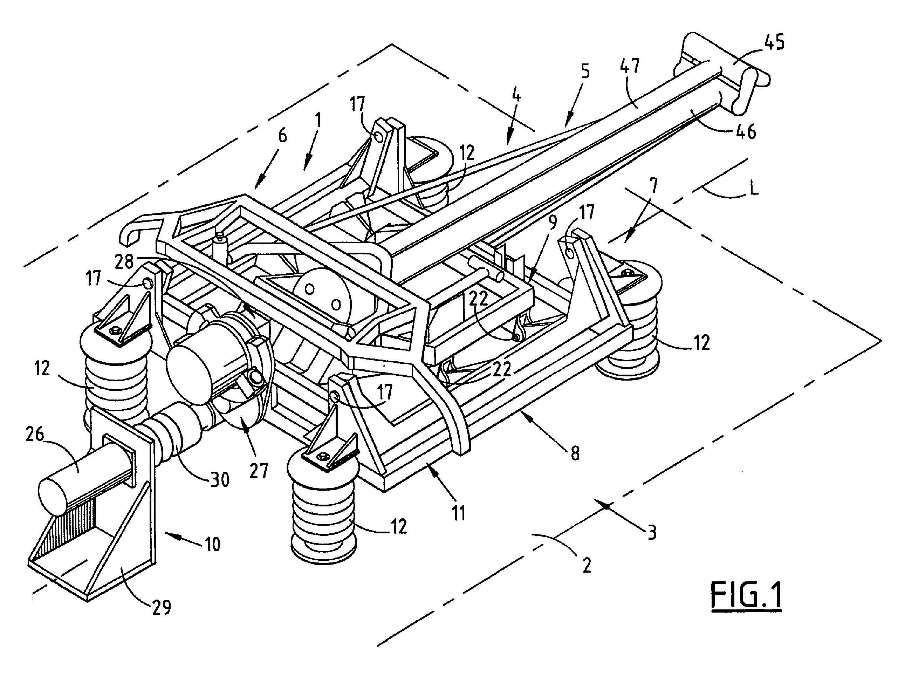

La figure 1 illustre un ensemble 1 de captage de courant surmontant le toit ou pavillon 2 d'un véhicule ferroviaire 3 pendulaire. Seule une partie du toit 2 est représentée schématiquement en traits mixtes sur la figure 1.

Cet ensemble 1 de captage de courant comprend essentiellement :
- un pantographe 4 comprenant lui-même un bras articulé 5 muni à une extrémité supérieure d'un archet 6,
- un support de pantographe 7 comprenant lui-même un premier châssis 8 fixe et un deuxième châssis 9 mobile, et
- des moyens 10 de déplacement du châssis mobile 9.

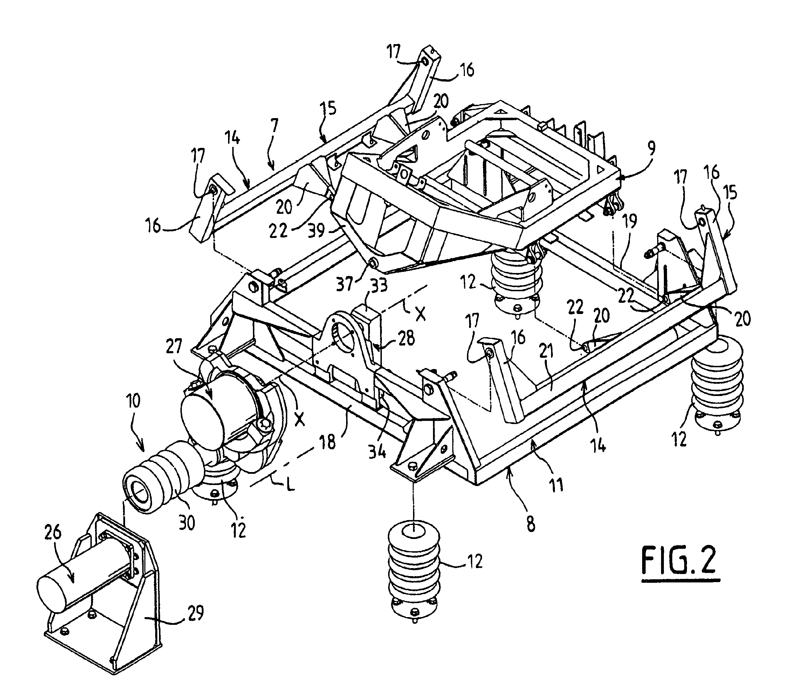

Dans un souci de clarté, la représentation du support 7 a été simplifiée sur la figure 1, mais la figure 2 illustre de manière plus complète sa structure.

Le châssis fixe 8 comprend un cadre 11 de forme sensiblement carrée ou rectangulaire, et quatre isolateurs électriques 12 disposés chacun au niveau d'un coin du cadre 11, sous ce dernier. Le châssis fixe 8 est monté sur le toit 2 par l'intermédiaire des isolateurs électriques 12 qui forment pieds d'appui du châssis 8 sur le toit 2. Les isolateurs 12 maintiennent le cadre 11 fixe 8 espacé du toit 2.

Le châssis mobile 9 est un cadre de dimensions inférieures à celles du cadre 11. Le châssis mobile 9 est disposé à l'intérieur du châssis fixe 8 et relié à celui-ci par deux supports rigides de pendulation 14 disposés de part et d'autre du châssis mobile 9.

Chaque support 14 comporte une partie 15 en U ou étrier, dont les deux branches 16 sont articulées en des points 17 au côté avant 18 et au côté arrière 19 du cadre 11, et deux pattes ou chapes 20, prolongeant la base 21 de l'étrier 15 vers le bas orthogonalement aux branches 16, et articulées en des points 22 à un côté latéral du châssis mobile 9.

Les supports de pendulation 14 ont donc, par rapport à la direction longitudinale L du véhicule 3, un profil transversal coudé, de concavité dirigée vers l'intérieur du support 7 de pantographe.

Les points 17 et 22 sont des points d'articulation autour d'axes parallèles à la direction longitudinale L.

Les points d'articulation 17 des branches 16 et respectivement les points d'articulation 22 des pattes 20 d'un même support de pendulation 14 sont alignés et espacés longitudinalement, c'est-à-dire le long de la direction longitudinale L du véhicule 3.

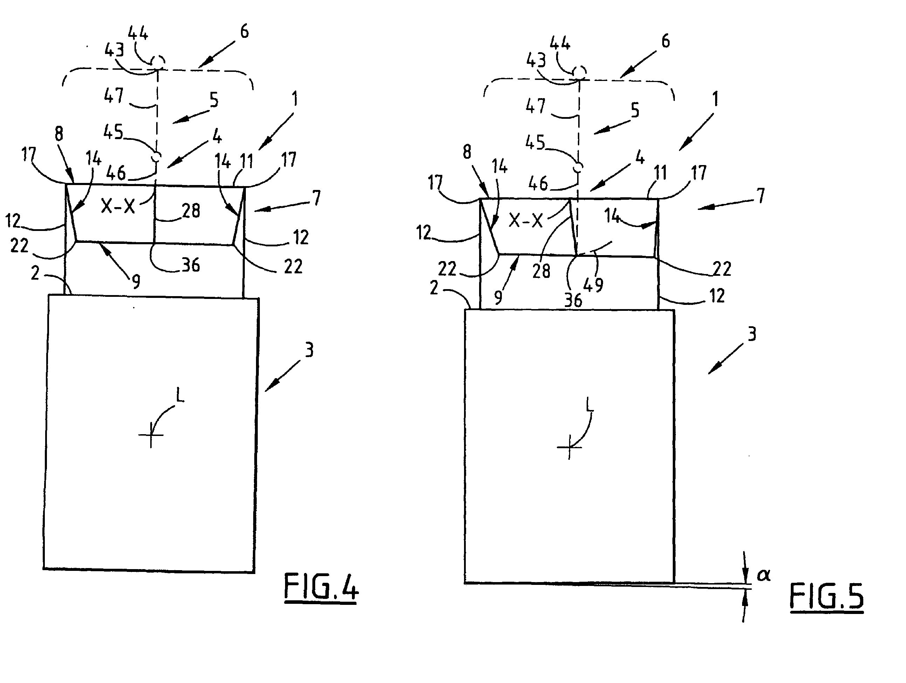

La figure 4 illustre schématiquement la caisse du véhicule 3 en position de repos, c'est-à-dire en l'absence de pendulation et donc avec son toit 2 parallèle à l'axe des essieux de ses bogies et au plan d'une voie ferrée sur laquelle le véhicule 3 se trouve. Sur cette figure, le plan de la voie ferrée est supposé être horizontal et seule la caisse du véhicule 3 et l'ensemble 1 de captage de courant sont représentés. Les points d'articulation 17 et 22 des supports de pendulation 14 aux châssis fixe 8 et mobile 9 forment alors transversalement un trapèze isocèle convergeant vers le bas, c'est-à-dire vers le toit 2 du véhicule ferroviaire 3.

On notera que sur cette figure 4, les supports de pendulation 14 ont été représentées, dans un souci de simplification, comme ayant un profil transversal rectiligne.

La distance séparant latéralement les points d'articulation 17 des deux supports de pendulation 14 est d'environ 870 mm. La distance séparant latéralement les points d'articulation 22 des deux supports de pendulation 14 est d'environ 760 mm. La distance séparant transversalement les points d'articulation 17 et 22 d'un même support de pendulation 14 est d'environ 280 mm. Les points d'articulation 17 des supports de pendulation 14 au châssis fixe 8 sont situés à 540 mm au-dessus du toit 2.

Grâce aux supports de pendulation 14 qui forment deux liaisons oscillantes espacées latéralement l'une de l'autre, le châssis mobile 9 peut penduler latéralement par rapport au châssis fixe 8 de part et d'autre de sa position de repos représentée sur la figure 4, le quadrilatère formé transversalement par les points d'articulation 17 et 22 se déformant alors.

Du fait de la rigidité des supports 14 et de l'espacement longitudinal des points d'articulation 17 et 22, le châssis mobile 9 est guidé de manière satisfaisante dans son mouvement de pendulation avec des mouvements parasites de rotation et de translation limités.

Comme on le voit sur les figures 1 et 2, les moyens 10 de déplacement du châssis mobile 9 sont disposés à l'avant (à gauche sur les figures 1 et 2) du support 7 de pantographe et comprennent un moteur électrique 26, un réducteur 27 et un bras d'entraînement 28.

Le moteur électrique 26 est fixé par un support 29 sur le toit 2 du véhicule ferroviaire 3. Son arbre de sortie non représenté est parallèle à la direction longitudinale L et orienté vers l'arrière. Cet arbre de sortie est relié au réducteur 27 par l'intermédiaire d'un isolateur électrique 30.

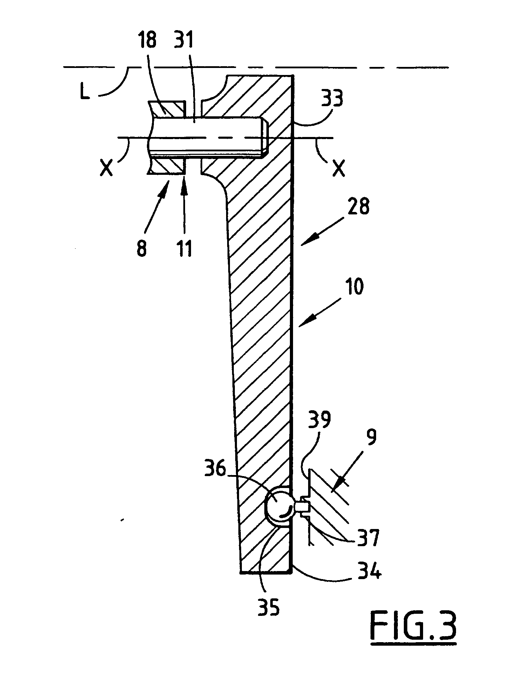

Le réducteur 27 est bridé sur le côté avant 18 du cadre 11 du châssis fixe 8. Son arbre de sortie 31 (figure 3) est parallèle à la direction longitudinale L et s'étend depuis le côté avant 18 du châssis fixe 8 légèrement vers l'arrière.

L'extrémité supérieure 33 du bras d'entraînement 28 est fixée sur cet arbre de sortie 31 si bien que le bras 28 peut pivoter sous l'action du moteur 26 latéralement autour d'un axe X-X parallèle à la direction longitudinale L.

L'extrémité inférieure 34 du bras 28 est munie d'une gorge oblongue 35 s'étendant dans le sens de la longueur du bras 28, à l'arrière de celui-ci. Cette gorge légèrement oblongue 35 reçoit une rotule 36 fixée sur un téton 37 qui fait saillie vers l'avant depuis le côté avant 39 du châssis mobile 9. La rotule 36 et la gorge oblongue 35 forment entre le bras d'entraînement 28 et le châssis mobile 9 une liaison rotulante et coulissant radialement par rapport à l'axe X-X.

Comme illustré schématiquement par la figure 4, la rotule 36, correspondant au point d'articulation du bras 28 au châssis mobile 9, est située au milieu de la petite base du trapèze formé par les points d'articulation 17 et 22. Ainsi, le point d'articulation 36 est situé latéralement à égale distance des points d'articulation 22 des supports de pendulation 14 au châssis mobile 9.

De même l'axe X-X autour duquel le bras 28 peut pivoter est situé latéralement à égale distance des points d'articulation 17 des supports de pendulation 14 au châssis fixe 8. Cet axe X-X est situé légèrement en dessous du niveau de ces points d'articulation 17. Cependant, l'axe X-X a été représenté par souci de clarté sur la grande base du trapèze formé transversalement par les points d'articulation 17 et 22.

L'extrémité inférieure du bras 5 du pantographe 4 est reliée au châssis mobile 9 de manière à solidariser latéralement le bras 5 et le châssis mobile 9.

Les supports de pendulation 14 sont alors disposées latéralement de part et d'autre du pantographe 4.

De manière classique, le bras 5 est déformable entre une position dépliée de captage du courant et une position pliée d'encombrement réduit, pour permettre la translation verticale de l'archet 6 au-dessus du toit 2.

Dans sa position dépliée, illustrée en pointillés sur la figure 4, une région centrale 43 de l'archet 6 du pantographe 4 est appuyée sur un fil de contact 44 d'une caténaire surmontant le véhicule ferroviaire 3.

En position pliée (figure 1), l'articulation intermédiaire 45 du bras 5, reliant son tronçon inférieur 46 et son tronçon supérieur 47, est située en arrière du support 7 de pantographe.

Lorsque le véhicule ferroviaire 3 circule sur une partie de voie ferrée courbe, sa caisse et donc le toit 2 s'incline latéralement d'un angle a vers le centre de courbure de la voie, par exemple vers la gauche comme illustré par la figure 5.

Le moteur 26 est alors piloté par une unité de commande non représentée pour faire pivoter le bras 28 latéralement dans le sens opposé, c'est-à-dire vers la droite sur la figure 5. Le châssis mobile 9 est alors déplacé latéralement par rapport au châssis fixe 8 sous l'action du bras d'entraînement 28 si bien que le bras 5 du pantographe 4 est maintenu sensiblement vertical ou orthogonal à la voie ferrée.

Ainsi, l'archet 6 est maintenu sensiblement horizontal ou parallèle au plan de la voie ferrée et le fil de contact 44 de la caténaire est maintenu en contact avec la région centrale 43 de l'archet 6.

On constate que lorsque le châssis mobile 9 se déplace latéralement au voisinage de sa position de repos, par déformation du quadrilatère formé transversalement par les points d'articulation 17 et 22, le point d'articulation 36 se déplace pratiquement sur un arc de cercle 49 (figure 5) centré sur l'axe X-X.

Ainsi, le bras 28 d'entraînement du châssis mobile 9 permet de déplacer celui-ci de manière satisfaisante pour assurer la contre-pendulation du pantographe 4.

De manière générale, les châssis fixe 8 et mobile 9 ainsi que les liaisons entre ceux-ci seront adaptés pour que le point d'articulation 36 décrive sensiblement un arc de cercle, lorsque le châssis mobile 9 pendule par rapport au châssis fixe 8 pour assurer une contrependulation d'angles de pendulation inférieurs à 10°.

En pratique, la liaison coulissante entre l'extrémité inférieure 34 du bras 28 et le châssis mobile 9 permet d'absorber les légers décalages radiaux de la rotule 36 par rapport à l'arc de cercle 49.

Par ailleurs, les supports rigides de pendulation 14 permettent un guidage latéral satisfaisant du châssis mobile 9 avec des frottements limités. Les supports de pendulation 14 permettent donc de s'affranchir des deux vérins latéraux et des guides nécessaires jusqu'à présent pour entraîner de manière satisfaisante le châssis mobile 9.

Les supports rigides de pendulation 14 contribuent donc, d'une part, à la limitation de l'encombrement de l'ensemble 1 de captage de courant, et d'autre part, à l'obtention d'une contrependulation efficace du pantographe.

On notera également que le profil transversal des supports de pendulation 14 à concavité dirigée vers l'intérieur du support 7 de pantographe permet d'obtenir un grand débattement angulaire des supports de pantographe 14 dans un volume réduit. Cette caractéristique permet de limiter encore plus l'encombrement de l'ensemble 1 du captage de courant.

De plus, la structure du support 7 du pantographe 4 permet l'utilisation d'un pantographe 4 de structure classique.

## Revendications

1. Ensemble (1) de captage de courant pour un véhicule ferroviaire, du type comprenant un pantographe (4) et un support de pantographe (7), le support de pantographe (7) comprenant un châssis fixe (8) de montage sur le toit (2) d'un véhicule ferroviaire (3) et un châssis mobile (9) portant le pantographe (4) et relié au châssis fixe (8) pour penduler latéralement par rapport à celui-ci de part et d'autre d'une position de repos, **caractérisé en ce que** le châssis mobile (9) est relié au châssis fixe (8) par deux supports latéraux rigides de pendulation (14) possédant un profil transversal de concavité dirigée vers l'intérieur de l'ensemble (1) de captage de courant, chaque support de pendulation (14) comprenant un étrier (15) articulé par ses branches (16) au châssis fixe (8) en deux points (17) espacés longitudinalement l'un de l'autre, et deux chapes (20) qui prolongent la base de l'étrier (15) et qui sont sensiblement orthogonales aux branches (16) de l'étrier (15), lesdites deux chapes étant articulées au châssis mobile (9) en deux points (22) espacés longitudinalement l'un de l'autre.

2. Ensemble selon la revendication 1, **caractérisé en ce que** les points (17, 22) d'articulation des supports de pendulation (14) aux châssis mobile (9) et fixe (8) forment transversalement un trapèze convergeant vers le bas lorsque l'ensemble (1) de captage de courant est monté sur le toit (2) d'un véhicule ferroviaire (3) et lorsque le châssis mobile (9) est en position de repos.

3. Véhicule ferroviaire comprenant un ensemble (1) de captage de courant monté sur le toit (2) du véhicule, **caractérisé en ce que** l'ensemble (1) de captage de courant est un ensemble selon l'une quelconque des revendications 1 et 2.

## Claims

1. Assembly (1) for collecting electrical current for a rail vehicle, of the type comprising a pantograph (4) and a pantograph support (7), the pantograph support (7) comprising a fixed frame (8) for arrangement on the roof (2) of a rail vehicle (3) and a movable frame (9) which carries the pantograph (4) and which is connected to the fixed frame (8) in order to pivot laterally relative thereto at one side and the other of a rest position, **characterised in that** the movable frame (9) is connected to the fixed frame (8) by two rigid lateral pivoting supports (14) which have a transverse profile having concavity which is directed towards the interior of the assembly (1) for collecting electrical current, each pivoting support (14) comprising a cross-bar (15) which is articulated by its branches (16) to the fixed frame (8) at two locations (17) which are longitudinally spaced apart from each other and two caps (20) which extend the base of the cross-bar (15) and which are substantially orthogonal relative to the branches (16) of the cross-bar (15), the two caps being articulated to the movable frame (9) at two locations (22) which are longitudinally spaced apart from each other.

2. Assembly according to claim 1, **characterised in that** the articulation locations (17, 22) of the pivoting supports (14) with respect to the movable frame (9) and fixed frame (8) transversely form a trapezium which converges in a downward direction when the assembly (1) for collecting electrical current is arranged on the roof (2) of a rail vehicle (3) and when the movable frame (9) is in a rest position.

3. Rail vehicle comprising an assembly (1) for collecting electrical current arranged on the roof (2) of the vehicle, **characterised in that** the assembly (1) for collecting electrical current is an assembly according to either claim 1 or claim 2.

## Patentansprüche

1. Schienenfahrzeug-Stromabnehmervorrichtung (1) des Typs, der einen Pantograph (4) und ein Pantographen-Grundgestell (7) umfasst, wobei das Pantographen-Grundgestell (7) einen festen Rahmen (8) zur Montage auf dem Dach (2) eines Schienenfahrzeugs (3) und einen beweglichen und mit dem festen Rahmen (8) verbundenen, den Pantograph (4) tragenden Rahmen (9) umfasst, der in Bezug auf diesen lateral pendeln kann, beiderseits von einer Ruheposition,
**dadurch gekennzeichnet, dass** der bewegliche Rahmen (9) mit dem festen Rahmen (8) verbunden ist durch zwei steife seitliche Pendelstützen (14) mit einem Querschnittprofil mit einer dem Innern der Stromabnehmervorrichtung (1) zugewandten Konkavität, wobei jede Pendelstütze (14) einen mittels seiner Schenkel (16) in zwei longitudinal voneinander beabstandeten Punkten (17) an dem festen Rahmen (8) angelenkten Bügel (15) und zwei Gabelgelenkelemente (20) umfasst, welche die Basis des Bügels (15) verlängern und die im Wesentliche rechtwinklig zu den Schenkeln (16) des Bügels (15) sind, wobei die beiden Gabelgelenkelemente in zwei longitudinal voneinander beabstandeten Punkten (22) an dem beweglichen Rahmen (9) angelenkt sind.

2. Vorrichtung nach Anspruch 1, **dadurch gekennzeichnet, dass** die Anlenkpunkte (17, 22) der Pendelstützen (14) an dem beweglichen (9) und festen (8) Rahmen in transversaler Richtung ein nach unten konvergierendes Trapez bilden, wenn die Stromabnehmervorrichtung (1) auf das Dach (2) eines Schienenfahrzeug (3) montiert ist und wenn der bewegliche Rahmen (9) sich in Ruhestellung befindet.

3. Schienenfahrzeug mit einer auf das Dach (2) des Fahrzeugs montierten Stromabnehmervorrichtung (1), **dadurch gekennzeichnet, dass** die Stromabnehmervorrichtung (1) eine Vorrichtung nach einem der Ansprüche 1 und 2 ist.
